# EUROPÄISCHE PATENTANMELDUNG

(11) **EP 2 650 099 A1**
(43) Veröffentlichungstag der Anmeldung: **16.10.2013**
(21) Anmeldenummer: 13163602.9
(22) Anmeldetag: 12.04.2013
(51) Int. Cl.: B29C 45/14

(54) **Handwerkzeug mit Holzumspritzung**

(30) Priorität: 13.04.2012 DE 102012007280
(71) Anmelder: MONTFORT Kunststofftechnik GmbH, 6842 Koblach (AT)
(72) Erfinder: Schmid, Martin, 6800 Feldkirch (AT)
(74) Vertreter: Greif, Thomas

(57) **Zusammenfassung**

Handwerkzeug, aufweisend einen Holzstiel (1) und daran befestigt ein der Funktion des Handwerkzeuges entsprechendes Funktionsteil, insbesondere ein Metallteil (3), dadurch gekennzeichnet, dass der Befestigungsbereich des Holzstieles {1}, an dem das Funktionsteil an dem Holzstiel (1) befestigt ist, mit einer Kunststoffumspritzung (2) umgeben ist.

## Beschreibung

Die Erfindung betrifft ein Handwerkszeug, aufweisend einen Holzstiel und daran befestigt ein der Funktion des Handwerkzeuges entsprechendes Funktionsteil, insbesondere ein Metallteil, gemäß den Merkmalen des Oberbegriffes des Patentanspruches 1.

Zielsetzung der Erfindung ist die Entwicklung eines Materialverbundes aus Holz und Kunststoff, der insbesondere für Stiele von Werkzeugen eingesetzt werden kann. Dabei sind die Vorteile der bestehenden Lösungen zu kombinieren und die Nachteile zu kompensieren.

Weltweit werden Stiele für alle möglichen Anwendungen von Handwerkszeugen benötigt. Ob als für Schaufeln, Spaten, Besen, Hämmer, Äxte etc. in klassischer Ausführung als auch für diverse Reinigungsgeräte in der Ausführung als Teleskop. Im Laufe der letzten Jahre wurden vermehrt Alternativen zum Holzstiel entwickelt.

Die heute am Markt befindlichen Stiele lassen sich grob in folgende Klassen unterteilen:
● Holzstiele
● Kunststoffstiele
● Verbundstiele (bestehend aus zwei oder mehr Materialien, z.B. Aluminiumrohre mit Kunststoffgriffen)

Keine der vorhandenen Varianten erfüllt jedoch die zum Teil recht hohen Anforderungen an die Stiele. Durch prägnante Nachteile haben alle Ihre Berechtigung und stellen nicht die ideale Lösung dar.

### Reine Holzstiele:

+ Haptik sehr angenehm, Material absorbiert natürliche Handfeuchtigkeit
+ jahrzehntelang erprobter und automatisierter Stand der Technik
+ aus natürlichen Ressourcen
+ biologisch abbaubar
+ natürliches Erscheinungsbild
+ nachhaltiges, nachwachsendes Rohmaterial
- Hohe optische Anforderungen (kein Ast, keine gezinkten Stiele)
- splittert und bricht bei hohen Belastungen infolge von Knick- und Schlagbelastungen (z.B. Landschaftsgärtner bringt hohe Knickbelastung auf den Stiel der Schaufel oder ein Pflock wird nicht mit dem Hammer, sondern mit dem Stiel getroffen)

### Kunststoffstiele:

+ Preis
+ Einsatz von Recycling-Material
- Festigkeit nicht ausreichend
- schlechte Haptik
- Optik großteils billig
- Berührungsangst der Kunden (ungewohnt)
- hoher Einsatz an künstlichen Materialien, die nicht biologisch verwertbar sind

### Glassfaser-Stiele:

+ Festigkeit hervorragend
- Preis
- schlechte Haptik
- hohes Gewicht
- hoher Einsatz an künstlichen Materialien, die nicht biologisch verwertbar sind
- Vibrationsübertragung
- Stiel nicht austauschbar, da eine direkte Verbindung mit dem Werkzeug besteht
- keine gleichmäßige Wandstärke aufgrund des erforderlichen Gas- oder Wasser-Injektionsverfahren, d. h. die Festigkeit ist schwankend

### Verbundstiele:

+ Festigkeit
- Preis
- hohe Abhängigkeit von Rohmaterialpreisen (z.B. Aluminium)
- schlechte Haptik
- Vibrationsübertragung
- hoher Montageaufwand
- keine wirtschaftliche Möglichkeit für Trennung und Recycling

Vorstehend steht das "+"-Zeichen als Synonym für einen Vorteil, das "-"-Zeichen als Synonym für einen Nachteil.

Der Erfindung liegt daher die Aufgabe zugrunde, die vorstehend geschilderten Nachteile zu vermeiden und unter Kostenaspekten die Herstellung und Funktionalität eines solchen Handwerkszeuges zu verbessern.

Diese Aufgabe ist durch die Merkmale des Patentanspruches 1 gelöst.

Erfindungsgemäß ist vorgesehen, dass der Befestigungsbereich des Holzstieles, an dem das Funktionsteil an dem Holzstiel befestigt ist, mit einer Kunststoffumspritzung umgeben ist. Dadurch wird einerseits eine Kostenreduzierung erreicht, da ein einfacher Holzstiel verwendet werden kann, der in dem Befestigungsbereich mit Kunststoff umspritzt wird. Durch die Kunststoffumspritzung werden die Nachteile des Holzes ausgeglichen und ein definierter Befestigungsbereich für das Funktionsteil zur Verfügung gestellt. Durch entsprechende äußere Formgebung des Befestigungsbereiches aus Kunststoff, der der inneren Kontur des Befestigungsbereiches des Funktionsteiles angepasst ist, wird eine schnelle Montage ermöglicht. Außerdem kann durch die konturmäßige Abstimmung der beiden Befestigungsbereiche aufeinander eine dauerhafte Festlegung des Funktionsteiles an dem Holzstiel erfolgen, wobei diese Festlegung so stabil ist, dass während des Betriebes des Handwerkszeuges nicht die Gefahr besteht, dass sich das Funktionsteil von dem Holzstiel lösten kann.

In Weiterbildung der Erfindung ist vorgesehen, dass die Kunststoffumspritzung in dem Befestigungsbereich des Holzstieles ein Übermaß gegenüber dem korrespondierenden Befestigungsbereich des Funktionsteiles aufweist. Dadurch ist der Vorteil gegeben, dass das Funktionsteil mit seinem zugehörigen Befestigungsbereich mittels Kraftschluss an dem Befestigungsbereich des kunststoffumspritzten Holzstieles festgelegt wird. Dadurch lässt sich die Montage vereinfachen, wobei gleichzeitig eine dauerhafte Festlegung des Funktionsteiles an dem Holzstiel sichergestellt ist.

In Weiterbildung der Erfindung erstreckt sich die Kunststoffumspritzung über den Befestigungsbereich hinweg über den Holzstiel. Dadurch können Bereiche des Holzstieles, die bei dem Umgang mit dem Handwerkszeug Beschädigungen ausgesetzt sind, vor diesen Beschädigungen bewahrt werden. Hier ist zum Beispiel bei einem Hammer daran zu denken, dass neben dem Befestigungsbereich auch ausgehend von diesem sich anschließende Bereiche des Holzstieles mit Kunststoff umspritzt sind, sodass diese vor Beschädigungen, zum Beispiel beim Einschlagen eines Nagels, wenn dieser verfehlt wird, geschützt sind. Außerdem erhöht sich gleichzeitig die Stabilität, sodass zur Reduzierung der Kosten ein Holzstiel mit einem reduzierten Querschnitt eingesetzt werden kann, der mit der über den Befestigungsbereich hinwegreichenden Kunststoffumspritzung versehen wird.

In Weiterbildung der Erfindung entspricht die Kunststoffumspritzung in dem Bereich des Holzstieles in seiner äußeren Kontur im Wesentlichen der inneren Kontur des korrespondieren Befestigungsbereiches des Funktionsteiles. In einem solchen Fall kann daran gedacht werden, durch zusätzliche Mittel, wie zum Beispiel Schrauben, Stifte, Nieten oder dergleichen, das Funktionsteil festzusetzen. Besteht das Funktionsteil seinerseits ebenfalls aus Kunststoff, kann in Betracht gezogen werden, dass dieses Funktionsteil auf dem aus Kunststoff bestehenden Befestigungsbereich aufgeklebt, verschweißt oder dergleichen wird.

Alternativ dazu ist es denkbar, dass die Kunststoffumspritzung in dem Befestigungsbereich des Holzstieles in seiner äußeren Kontur von der inneren Kontur des korrespondierenden Befestigungsbereiches des Funktionsteiles abweicht. Dadurch ist es allgemein möglich, das Funktionsteil mittels eines Formschlusses auf dem zugehörigen Befestigungsbereich des Holzstieles festzulegen. Durch entsprechende Ausgestaltung der äußeren Kontur des Befestigungsbereiches des Holzstieles und der korrespondierenden inneren Kontur des Befestigungsbereiches des Funktionsteiles kann dieses mittels Formschluss durch einmalige hohe Kraftaufwendung an dem Holzstiel festgelegt werden. Dieser Vorgang ist in besonders vorteilhafter Weise automatisierbar, sodass entsprechende Handwerkszeuge schnell und rational hergestellt werden können.

In Weiterbildung der Erfindung ist vorgesehen, dass die Konturen der beiden Befestigungsbereiche so gestaltet sind, dass sie eine Verrastung des Funktionsteiles auf dem Holzstiel ermöglichen. Hier kommt beispielsweise eine Feder-Nut-Verrastung in Betracht, wobei der Befestigungsbereich des Holzstieles, genauer dessen Kunststoffumspritzung, die Feder (allgemein Erhöhung) aufweist und korrespondierend dazu in dem Befestigungsbereich des Funktionsteiles eine Nut (allgemein eine korrespondierende Vertiefung) eingebracht ist.

Durch Zusammenbringen von Funktionsteil und Kunststoffumspritzung im Befestigungsbereich des Holzstieles wird das Funktionsteil an dem Holzstiel verrastet. Hierbei kommen solche Geometrien zwecks Verrastung in Längsrichtung und/oder in Querrichtung zur Längsachse des Holzstieles in Betracht. Von besonderem Vorteil sind Verrastungen sowohl längs als auch quer zu der Längsachse des Holzstieles, da somit alle beim Arbeiten mit dem Handwerkszeug auf das Funktionsteil wirkenden Kräfte (Zug- und Druckbeanspruchungen sowie Verdrehungen) nicht zu einer Bewegung des Funktionsteiles relativ zu dem Holzstiel führen können.

In Weiterbildung der Erfindung ist das Funktionsteil ein Metallteil oder ein Kunststoffteil. Ist das Funktionsteil ein Metallteil, ist es von besonderem Vorteil, dieses Metallteil mittels Kraft- und/oder Formschluss an der Kunststoffumspritzung im Befestigungsbereich des Holzstieles festzulegen, da andere Möglichkeiten, wie zum Beispiel Verkleben, Verschweißen oder dergleichen, in diesem Fall nicht in Betracht kommen. Im Gegensatz hierzu kommen die letztgenannten Verfahren wie Verkleben, Verscheißen oder dergleichen dann in Betracht, wenn das Funktionsteil ein Kunststoffteil ist. In diesem Fall können die Kunststoffumspritzung des Holzstieles und das Kunststoffteil aus dem gleichen oder aus unterschiedlichen Materialien bestehen. Es bietet sich an, gleiche Materialien zu verwenden, wenn dies die Funktion, insbesondere hinsichtlich der Stabilität, des Funktionsteiles und der Funktion der Holzumspritzung zulassen, da auch in einem solchen Fall die stoffschlüssige Befestigung des Kunststoffteiles mit der Kunststoffumspritzung des Holzstieles sehr einfach und dauerhaft zu realisieren ist. Bestehen die Kunststoffumspritzung und das Kunststoffteil aus unterschiedlichen Materialien, kommen nicht nur reine stoffschlüssige Verbindungen in Betracht, sondern es sind ergänzend oder alternativ auch form- und/oder kraftschlüssige Verbindungen möglich.

Stiel für Vorschlaghammer:
● Erhöhung der Schlagfestigkeit (wenn das einzuschlagende Element mit dem Stiel anstelle des Hammers getroffen wird, was die häufigste Ursache für ein Versagen des Stiels ist)
● Reduktion der Vibrationsübertragung
● Integration zusätzlicher Funktionselemente wie beispielsweise einen Sicherheitsgriff

Zusätzlich werden folgende Anforderungen an die eingesetzten Materialien gestellt:
● Auf Basis nachwachsender Rohstoffe
● biologisch verwertbar
● frei von Tropenholz

Das direkte Umspritzen der Holzelemente führt zu einer stabilen, mechanischen Verbindung der Materialien. Erst dadurch können die Vorteile der Kombination optimal genutzt und auf das Produkt übertragen werden:
● hervorragende Haptik des Holzelementes
● evolutionäre Weiterentwicklung einer bewährten Technologie
● durch die Kombination mit dem Kunststoff robuster und beständiger gegen Schlag- und Knickbelastungen
● Materialen basieren auf natürlichen Ressourcen
● vollständig biologisch abbaubar
● jegliche Montage wird durch das direkte Umspritzen der Holzelemente überflüssig
● durch die Möglichkeit eines hohen Automatisierungsgrades ist eine wirtschaftliche Herstellung gegeben
● der Einsatz von optisch minderwertigem Holz, das den Kunststoffmantel verdeckt, reduziert den Ausschuss an Holzmaterialien, was sich positiv auf die Kosten auswirkt. Der weiterentwickelte Stiel ist nahezu kostenneutral zu den heutigen Holzstielen herstellbar
● dank des Kunststoffelementes können Funktionen integriert werden (z.B. Befestigung der Metallteile wie Schaufel oder Hammer)
● die geometrischen Gestaltungsmöglichkeiten des Kunststoffelementes eröffnen neue, marketingspezifische Dimensionen
● Kundenabhängig kann die Farbgestaltung ohne wesentlichen Aufwand angepasst und gegebenenfalls auch ein Logo eingearbeitet werden
● Ganz wesentlich für die Erfindung ist es, den umspritzten Bereich als Befestigungsbereich für die Anordnung und Befestigung eines Arbeitsmittels (z.B. Schaufel, Hammer und dergleichen) auszubilden. In vorteilhafter Weise sind der Befestigungsbereich des umspritzten Kunststoffes und der korrespondierende Befestigungsbereich des Arbeitsmittels derart aufeinander abgestimmt, dass das Arbeitsmittels dauerhaft und verliersicher mittels Formpassung an dem Holzelement (z.B. Stiel) festgelegt ist. Insbesondere ist der durch die Umspritzung realisierte Befestigungsbereich des Holzelementes formgrösser (z.B. durchmessergrösser) als der Befestigungsbereich des Arbeitsmittels, wobei der Befestigungsbereich des Holzelementes durch Presspassung in dem Befestigungsbereich des Arbeitsmittels festgelegt ist.

Eine Holz-Kunststoff-Verbundlösung wird als Stiel eingesetzt, um die Vorteile der beiden Materialien zu kombinieren und die jeweiligen Nachteile zu kompensieren. Während das Holzelement die erforderliche Festigkeit und seine hervorragende Haptik in das System einbringt, eröffnet der Kunststoff neue Möglichkeiten in der Formgestaltung und erhöht den Schutz vor mechanischen Belastungen. Das Holzelement bringt die Festigkeit in den Verbund ein. Durch die Kunststoffummantelung soll zusätzlicher Schutz gegenüber mechanischen Belastungen erzielt werden.

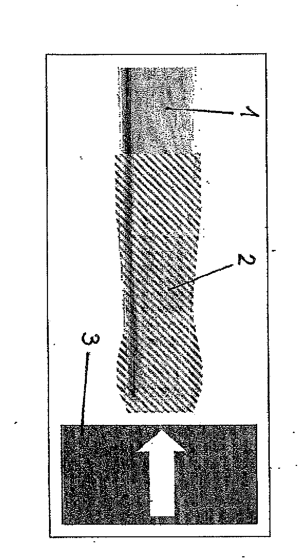

In der einzigen Figur ist am Beispiel eines als Hammer ausgebildeten Handwerkszeuges das eine Ende eines Holzstieles 1 gezeigt, wobei dieses Ende des Holzstieles 1 mit einer Kunststoffumspritzung 2 umgeben ist. Das Funktionsteil ist in diesem Fall ein Metallteil 3, nämlich der Hammerkopf. Die axiale Erstreckung der Kunststoffumspritzung 2 ist größer als die Breite des Metallteiles 3, welches eine entsprechende Öffnung zur Aufnahme des Holzstieles 1 mit seiner Kunststoffumspritzung 2 aufweist. In diesem Fall weicht die Kunststoffumspritzung 2 in axialer Richtung in dem Befestigungsbereich des Holzstieles 1 in seiner äußeren Kontur von der inneren Kontur des korrespondierenden Befestigungsbereiches des Metallteiles 3 ab. Hierzu ist am äußersten Ende des Holzstieles 1 die Kunststoffumspritzung 2 mit einer solchen Geometrie, insbesondere einem solchen Durchmesser, versehen, die der Eingangsgeometrie (insbesondere dem Eingangsdurchmesser) der inneren Kontur im Befestigungsbereich des Metallteiles 3 entspricht. Dies ermöglicht eine einfache Einführung des Befestigungsbereiches des Holzstieles 1 in die entsprechende Öffnung in dem Metallteil 3. Um dies zu erleichtern, kann ergänzend auch die Öffnung des Metallteiles 3 mit einer Aufweitung versehen sein. Wenn das Metallteil 3 in Pfeilrichtung der Figur in Richtung des Holzstieles auf die Kunststoffumspritzung 2 aufgeschoben wird, wird diese in einer solchen Art verformt, dass das Metallteil 3 unter Aufbringung bestimmter Kräfte auf die Kunststoffumspritzung aufgepresst wird. Hierbei sind diese Kräfte so hoch, die bei dem normalen Umgang mit dem Handwerkszeug (hier der Hammer) nicht erreicht werden. Das bedeutet, dass, nachdem das Metallteil 3 vollständig auf der Kunststoffumspritzung 2 aufgeschoben worden ist, sicher und dauerhaft in dieser Lage auf dem Holzstiel 1 festgelegt ist. Diese endgültige Lage ist dann erreicht, wenn das rechte Ende (bei Betrachtung der Figur) des Holzstieles 1 an dem rechten Ende des Metallteiles 3 angekommen ist oder nur unwesentlich von diesem übersteht oder in diesem noch hereinragt. Gegebenenfalls kann nach der Montage des Metallteiles 3 auf dem Holzstiel 1 das Ende der Kunststoffumspritzung über die äußere Oberfläche des Metallteiles 3 hinausragen und dieser herausragende Teil entfernt, insbesondere abgesägt werden.

**Bezugszeichenliste**

| | |
|---|---|
| 1. | Holzstiel |
| 2. | Kunststoffumspritzung |
| 3. | Metallteil |

## Patentansprüche

1. Handwerkzeug, aufweisend einen Holzstiel (1) und daran befestigt ein der Funktion des Handwerkzeuges entsprechendes Funktionsteil, insbesondere ein Metallteil (3), **dadurch gekennzeichnet, dass** der Befestigungsbereich des Holzstieles (1), an dem das Funktionsteil an dem Holzstiel (1) befestigt ist, mit einer Kunststoffumspritzung (2) umgeben ist.

2. Handwerkzeug nach Anspruch 1, **dadurch gekennzeichnet, dass** die Kunststoffumspritzung (2) in dem Befestigungsbereich des Holzstieles (1) ein Übermaß gegenüber dem korrespondierenden Befestigungsbereich des Funktionsteiles aufweist.

3. Handwerkzeug nach Anspruch 1 oder 2, **dadurch gekennzeichnet, dass** sich die Kunststoffumspritzung (2) über den Befestigungsbereich hinweg über den Holzstiel (1) erstreckt.

4. Handwerkzeug nach Anspruch 1, 2 oder 3, **dadurch gekennzeichnet, dass** die Kunststoffumspritzung (2) in dem Befestigungsbereich des Holzstieles (1) in seiner äusseren Kontur im Wesentlichen der inneren Kontur des korrespondierenden Befestigungsbereiches des Funktionsteiles entspricht.

5. Handwerkzeug nach Anspruch 1, 2 oder 3, **dadurch gekennzeichnet, dass** die Kunststoffumspritzung (2) in dem Befestigungsbereich des Holzstieles (1) in seiner äußeren Kontur von der inneren Kontur des korrespondierenden Befestigungsbereiches des Funktionsteiles abweicht.

6. Handwerkzeug nach Anspruch 5, **dadurch gekennzeichnet, dass** die Konturen der beiden Befestigungsbereiche so gestaltet sind, dass sie eine Verrastung des Funktionsteiles auf dem Holzstiel (1) ermöglichen.

7. Handwerkzeug nach einem der vorhergehenden Ansprüche, **dadurch gekennzeichnet, dass** das Funktionsteil ein Metallteil (3) oder ein Kunststoffteil ist.

8. Handwerkzeug nach einem der vorhergehenden Ansprüche, **dadurch gekennzeichnet, dass** die Kunststoffumspritzung (2) in den Holzstiel (1) zumindest oberflächlich eingedrungen ist.
